# EUROPEAN PATENT SPECIFICATION

(11) **EP 3 750 761 B1**
(45) Date of publication and mention of the grant of the patent: **28.02.2024**
(21) Application number: 19461544.9
(22) Date of filing: 13.06.2019
(51) Int. Cl.: B60S 1/34, B60S 1/04, B60S 1/38

(54) **TERMINAL PART FOR A WIPER ARM**
ENDGERÄTETEIL FÜR EINEN WISCHARM
PIÈCE DE TERMINAL POUR UN BRAS D'ESSUIE-GLACE

(43) Date of publication of application: 16.12.2020
(73) Proprietor: Valeo Autosystemy SP. Z.O.O., 32-050 Skawina (PL)
(72) Inventor: BOJDA, Rafal, 32 050 SKAWINA (PL); OSTROGORSKI, Tomasz, 32 050 SKAWINA (PL); CHAMROUX, Jérémie, 32 050 SKAWINA (PL)
(74) Representative: Valeo Visibility

(56) References cited:
- EP-A1- 0 700 813
- EP-A2- 2 821 297
- DE-A1-102015 216 042
- FR-A1- 2 997 358

## Description

### TECHNICAL FIELD

The present invention relates to a wiper device, in particular for a motor vehicle window. More particularly, the present invention relates to a terminal part of a wiper arm adapted to couple a wiper blade of such a wiper device.

### STATE OF THE ART

A motor vehicle is conventionally equipped with a wiper device to ensure a wiping of a glass window, including a windshield, and to prevent the vision of the driver from his environment is disrupted.

Generally, these wiper devices comprise a wiper arm assembly comprising either one arm or a pair of arms, performing an angular reciprocating movement, and a wiper blade assembly comprising elongated blades, carrying a blade rubber made of elastic material.

These blade rubbers rub against the glass window and evacuate water and dirt by driving it out of the driver's field of vision.

The wiper devices also include a connecting system for coupling the wiper blade assembly and the wiper arm assembly. The connecting system comprises an adapter and a connector. The connector is a piece that is secured to the wiper blade while the adapter is secured to the wiper arm and both the adapter and the connector are configured to cooperate with each other and allow the connection of the wiper arm to the wiper blade. In particular, there is provided an articulated connection between the connector and the adapter to allow pivoting of the wiper blade relative to the wiper arm. Generally, the adapter is configured to be engaged in a terminal part of the wiper arm. It is well known that the wiper blades have tendency to lift from the windshield being cleaned when the vehicular driving speeds are high. Therefore, such conventional windshield wipers suffers from poor cleaning performance by the wiper blade due to inadequate pressure on the windshield. For solving this problem, a spoiler or an air-guiding element is proposed. In some conventional arts, the spoiler is integrally formed with the wiper blade of the wiper blade assemblies. For instance, the U.S. Pat. No. 4,741,071 discloses a windshield wiper blade assembly in which the main yoke has a spoiler formed integrally therewith. In some other conventional arts, the spoiler is connected to the wiper arm assembly. For instance, the U.S. Pat. No. 5,564,157 discloses a windshield wiper blade assembly in which the spoiler is adjustably attached either to a primary lever, which connects the support members with the cover to a wiper arm, or to the wiper arm. Further, in some other conventional arts, the spoiler is connected to the adapter. For instance, Pat. No. DE102015216042 discloses a wind deflector element intended to be connected directly with the wiper arm adapter. In these configuration, the spoiler is oriented parallel to a blade axis of the wiper blade. As the spoiler is oriented parallel to the blade axis, the spoiler function can be used only on a few percentages of the wiping pattern.

These conventional wiper devices suffer from poor aerodynamic performance that affects the effectiveness of wiping notably at high speeds due to several losses at the adapter (or the terminal part). Indeed, most of all the aerodynamic performance looses results from the connection system. For example, due to high tip force losses and high blade lift, wipe quality will probably not be reached at high speeds, for example, at 250km/h.

Thus, there is a need to improve the aerodynamic performance of the actual design of the connection system, notably due to a non-optimal orientation of the spoiler on the connection system. Such a feature penalizes the circulation of the airflow and therefore the general aerodynamism of the wiper device.

The document FR 2 997 358 A1 discloses a terminal part of a wiper arm according to the preamble of claim 1.

### SUMMARY OF THE INVENTION

An object of the invention is to alleviate the problems raised by the prior arts. To be more precise, an object of the invention is to provide a terminal part of a wiper arm or an adapter whose design ensures good aerodynamic performance at high speeds without perturbation on a wiper blade.

Other object of the present invention is to provide a wiper device, which can provide a good wipe quality performance when the vehicle is running at high speeds.

To achieve this objective, the present invention provides a terminal part of a wiper arm according to claim 1.

This specific arrangement of the air-guiding element on the terminal part of the present invention allows the airflow path circulating along the windshield (glass window), which might come against the sidewall of the blade mounting part of the terminal part, to be deflected. The air-guiding element orientation allows transforming a pressure applied by the airflow into a pressing force of the wiper blade against the windshield. This allows good aerodynamic performance at high speeds and therefore a good wipe quality performance.

The terminal part according to the present invention advantageously comprises at least one of the following improvements; the following technical characteristics can be taken alone or in combination.

According to one characteristic of the present invention, the air-guiding element is fixed at a second end of the blade mounting part. By "second end of the blade mounting part", it is understood an end of the longitudinally elongated shape for rotatably mounting a wiper blade configured to receive a connexion system dedicated to fasten the wiper blade to the terminal part of the wiper arm.

According to one characteristic of the present invention, the terminal part is a single integrally formed part.

In other words, the air-guiding element is made with the terminal part by the same process.

For example, the air-guiding element and the terminal part may be coextruded or co-moulded. In other words, the air-guiding element and the terminal part then form a one-piece assembly, that is to say an assembly that cannot be separated without causing the deterioration of the air-guiding element and / or the terminal part.

According to an alternative aspect of the invention, the air-guiding element is fixed to the blade mounting part by a fixing means.

Indeed, the air-guiding element is fixed as a separate element, to the sidewall of the second end of the blade mounting part by a fixing means such as an engagement connection, for instance via a form fitting connection, a bayonet connection, or by means of gluing, of welding, of screwing, of clamping or even of stamping.

According to one characteristic of the invention, the blade mounting part is in U-shaped cross section delimited by two transversely opposite longitudinal parallel sidewalls, linked to each other by a horizontal upper wall, configured to delimit an interior mount region for mounting the wiper blade.

The interior mount region receives a connexion system, composed of an adapter and a connector. More particularly, the interior mount region of the blade mounting part of the terminal part is configured to receive the adapter, adapted to cooperate with the connector securely fixed on the wiper blade in order to form an articulated connection and to allow pivoting of the wiper blade relative to the wiper arm.

In other words, the air-guiding element is fixed on one of the two transversely opposite longitudinal parallel sidewalls of the blade mounting part of the terminal part, in such a way that it faces the airflow circulating from the hood of the motor vehicle to the windshield when the motor vehicle is running.

According to the invention, the air-guiding element includes an elongated body having an upper side, a lower side, as well as, in the direction in which a stream of airflows, a leading edge and a trailing edge opposite to the leading edge. By lower side, it is understood the side of the air-guiding element which faces the swept surface, typically the windshield of the vehicle. By upper side, it is understood the side of the air-guiding element, opposed to the lower side, which faces to the horizontal upper wall of the blade mounting part.

By leading edge, it is understood the free edge directed towards the swept surface, it divides the airflow coming along the wiper device into two sections, each passing one side of the air-guiding element.

By trailing edge, it is understood the free edge directed towards the horizontal upper wall of the blade mounting part. It is the edge where the two airflows, divided by the leading edge, meet again to form one airflow after its passage on the air-guiding element.

More particularly, the elongated body of the air-guiding element extends transversally to the longitudinal axis of the blade mounting part, from the lateral side of the blade mounting part, with an inclined plane with respect to the longitudinal axis of the blade mounting part.

Such a characteristic allows guiding the airflow arriving against the wiper device, by deflecting it along the inclined plane formed by the air-guiding element, from the leading edge to the trailing edge, so that the air comes to lick subsequently the upper side of the air-guiding element and thus participates in pressing the wiper device against the glass window.

Preferably, the inclined plane formed by the air-guiding element has an inclination angle with respect to the longitudinal axis of the blade mounting part which is comprised between 30 and 45 degree and more preferably comprised between 35,5 and 38,5 degree.

According to the invention, the air-guiding element is contoured to have a downwardly concave configuration extending from the trailing edge to the leading edge.

According to the invention, the distance traversed by the airflow between the leading edge and the trailing edge via the lower side is more than the distance traversed by the airflow between the leading edge and the trailing edge via the upper side.

Preferably, the distance between the leading edge and the trailing edge via the lower side is between 28mm and 40mm and more preferably between 32,5 mm and 35,5 mm, superior to the distance between the leading edge and the trailing edge via the upper side, which is comprised between 20 mm and 35 mm and more preferably comprised between 26mm and 29mm.

Preferably, the air-guiding element has a curvature radius comprised in the range of 22 to 28 mm, and more preferably in the range of 24 to 26 mm.

By "curvature radius", it is understood the radius of the circular arc which best approximates the curve that formed the air guiding element.

According to one characteristic of the invention, the depth of the air-guiding element is between 26 and 37 mm and more preferably in the range of 20 mm to 43 mm.

By "depth", it is understood the length of the air-guiding element extending substantially orthogonal to the longitudinal axis of the blade mounting part from the sidewall of the blade mounting part.

According to one characteristic of the present invention, the wiper arm mounting part is configured for rotatably mounting at least one wiper arm in a arm mounting area so that the at least one wiper arm can rotate around a arm rotation axis ; preferably the wiper arm mounting part is configured for rotatably mounting a first wiper arm in a first arm mounting area and a second wiper arm in a second mounting area so that the first wiper arm can rotate around a first arm rotation axis while the second wiper arm can rotate around a second arm rotation axis.

In other words, the terminal part of the present invention is also designed for a wiper device comprising a pair of wiper arms, such as a pantograph wiper device. Such wiper arms are substantially parallel to one another in a rest position and extend in the same plane.

According to this particular characteristic, the wiper arm mounting part extends substantially perpendicular to the longitudinal axis of the blade mounting part from a first end of the blade mounting part. By "first end of the blade mounting part", it is understood an end of the longitudinally elongated shape for rotatably mounting a wiper blade which is linked to one end of the wiper arm mounting part. In other words, the first end of the blade mounting part is opposed to the second end of the blade mounting part.

On one of the two transversely opposite longitudinal parallel sidewalls of the blade mounting part, the air-guiding element is fixed, in such a way that it faces the wiper arm mounting part.

According to this particular characteristic, the wiper arm mounting part is a longitudinal elongated part comprising an upper portion and a lower portion, and wherein the first arm mounting area and the second arm mounting area are defined between the upper portion and the lower portion.

According to this particular characteristic, the wiper arm mounting part includes an opening between the first arm mounting area and the second arm mounting area. This opening allows the channelling of the airflow towards the air-guiding element. This results in further improving the down lift that is being generated because of the pressure difference between the upper side and the lower side of the air-guiding element.

According to one non-limiting embodiment of the present invention, the present invention also proposes a wiper arm unit comprising at least one wiper arm having a first longitudinal end and a second longitudinal end. The first longitudinal end is mounted in the terminal part, and the second longitudinal end is fixed to a wiper shaft.

In a specific embodiment, the at least one wiper arm has a rounded profile.

In a particular embodiment, the wiper arm unit comprises a first pantograph wiper arm and a second pantograph wiper arm.

According to one non-limiting embodiment of the present invention, the present invention also proposes a wiper device comprising: an elongated flat wiper blade adapted for wiping a windshield; the wiper arm unit and the terminal part according to the present invention.

Thus, the terminal part of the present invention ensures good aerodynamic performance of the wiper device at high speeds without perturbation on a wiper blade.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Figure 1 shows a side view of a wiper device comprising a wiper arm unit and a terminal part according to the present invention.
Figure 2 shows a perspective view of the wiper arm unit coupled with the terminal part, according to the present invention.
Figures 3a and 3b show respectively a top view and a side view of the terminal part of the wiper arm according to the present invention.

### DETAILED DESCRIPTION OF THE INVENTION

The following detailed description describes various features and functions of the disclosed systems and methods with reference to accompanying figures. The illustrative system and method embodiments are not meant to be limiting. It may be readily understood that certain aspects of the disclosed systems and methods can be arranged and combined in wide variety of different configurations, all of which are contemplated herein.

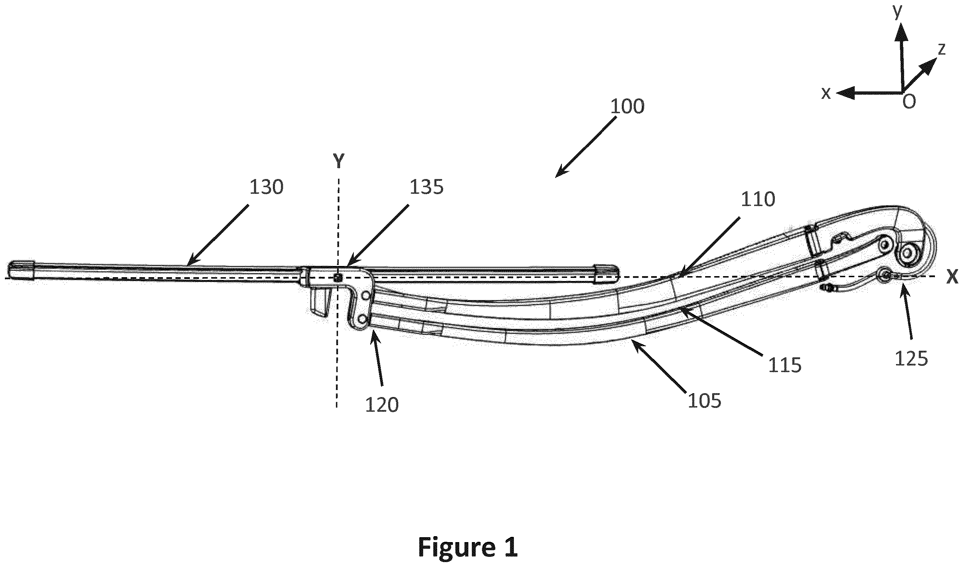

In the following description, the longitudinal, vertical or transverse denominations refer to the orientation of a terminal part of a wiper arm. The longitudinal direction corresponds to a direction of longitudinal extension of a wiper blade, this longitudinal direction being parallel to an axis Ox of an orthonormal reference, for example represented in FIG. 1. The transverse direction corresponds to a direction parallel to an Oy axis of this orthonormal frame, the axis Oy being perpendicular to the axis Ox. A vertical direction corresponds to a direction parallel to an axis Oz of the orthonormal coordinate system, the axis Oz being perpendicular to the axis Ox and the axis Oy.

On Figure 1 is depicted a pantograph wiper device 100 configured to be installed on a motor vehicle to have a good wipe quality performance, in particular when the motor vehicle is running at high speeds. By high speeds, it is understood a motor vehicle speed comprised between 100 and 250 km/h.

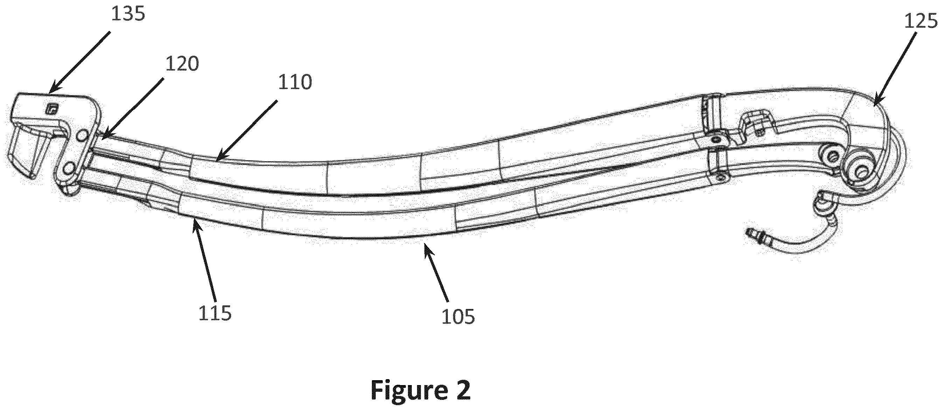

The wiper device 100 illustrated in Figure 1 comprises a wiper arm unit 105, (also illustrated in Figure 2), performing a back-and-forth, notably angular movement. The wiper arm unit 105 comprises two pantograph wiper arms 110, 115 longitudinally and substantially parallel to each other, which at least in part, extend substantially in the same plane (Oxy). Each of the two pantograph arms 110, 115 has a first longitudinal end 120 and a second longitudinal end 125. The second longitudinal ends 125 of the pantograph wiper arms 110, 115 are fixed to a wiper shaft (not shown in the Figures). Hence, each arm 110, 115 can pivot generally about an axis substantially vertical (Oz) defined by the wiper shaft to a plane defined by the windshield to be cleaned.

In a preferred embodiment, the pantograph wiper arms 110, 115 have a rounded profile. Thus, the pantograph wiper arms have an aerodynamic profile.

The wiper device 100 further comprises a longitudinally elongated wiper blade 130 extending along a longitudinal axis, parallel to axis Ox, known as longitudinal axis X. The wiper blade of the illustrated example is of type 'flat blade'. The wiper blade 130 bears a blade rubber from an elastic material such as rubber or elastomeric material. The blade rubber rubs against the exterior surface of the windshield and removes the water, carrying it out of the field of view of the driver. The wiper blade 130 is produced in the form of a semi-rigid assembly, which supports the blade rubber along its entire length using one or more backing strips, which curve the wiper blade 130 and allow the wiper device 100 and wiper blade to be pressed against the windshield.

The wiper blade has a body, which may comprise at least one spoiler having a deflection surface facing the front of the vehicle when the wiper blade is mounted on the motor vehicle, so that the deflection surface is the spoiler surface, which is first striked by the airflow path when the motor vehicle is running. The spoiler is intended to improve the backing of the wiper blade on the windshield, thanks to its defection surface striked by the airflow. Here, in the example of the invention, the body of the wiper blade comprises two spoilers aligned in series on both sides of a connecting system.

The wiper blade may also comprise end-clips, arranged at each of the longitudinal ends of the wiper blade, so that they allow the wiper blade and the one or more backing strips to remain in position within the body of the wiper blade.

The wiper blade 130 is detachably connected to the wiper arm unit 105 by the connecting system (not visible in the Figures) comprising a connector and an adapter that complement one another. The connector is a component which is secured to the wiper device 100 and which is generally fixed directly to the wiper blade 130, whereas the adapter is connected to the connector. The adapter is an intermediate component that allows the connector to be connected and fixed to the wiper arm unit 105 in a pivotally way. It is shaped so that it can be engaged in a terminal part 135 in which is mounted the wiper arm unit 105, especially first longitudinal ends 120 of the two pantograph wiper arms 110, 115.

The terminal part 135 as illustrated in the Figures 1, 2, 3a and 3b is adapted to be detachably couple the wiper blade 130 and also adapted to couple the wiper arm unit 105 of the wiper device 100 described above.

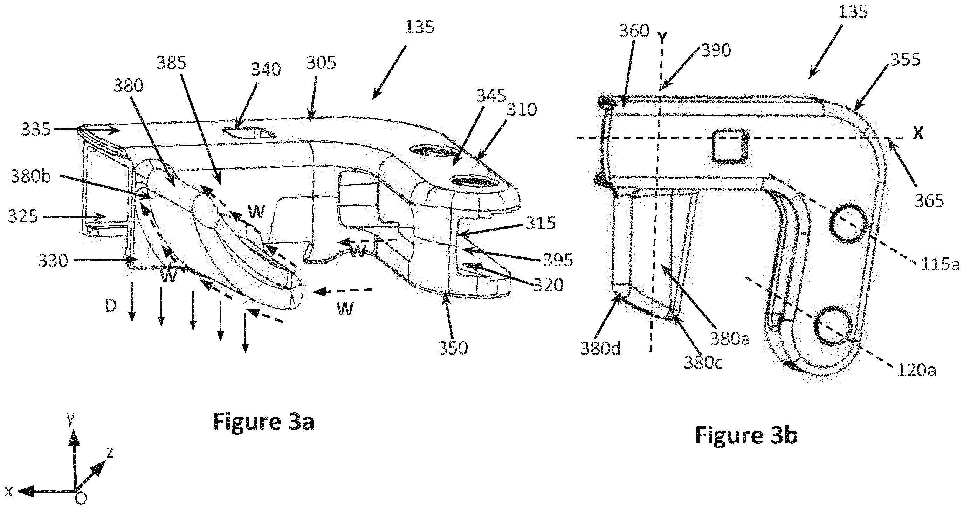

Indeed, the terminal part 135 comprises two mounting parts: a blade mounting part 305 and a wiper arm mounting part 310, shown in the Figures 3a and 3b. The wiper arm mounting part 310 comprises a first arm mounting area 315 and a second arm mounting area 320. The blade mounting part 305 has a longitudinally elongated shape for rotatably mounting the wiper blade 130 at its second end 360, configured for receiving the connecting system, so that the wiper blade 130 can rotate around a rotation axis (Oy) of the wiper blade 130.

More particularly, the blade mounting part 305 is in U-shaped cross section delimited by two transversely opposite longitudinal parallel sidewalls 325, 330 linked to each other by a horizontal upper wall 335, configured to delimit an interior mount region for mounting the wiper blade 130 by means of the connecting system. The upper wall 335, extending along a longitudinal axis X comprises a recess 340 to engage reversibly a pin of the connecting system, coupling in this way the wiper blade 130 to the terminal part 135. Typically, mounting is done by clamping of elements of the blade mounting part 305 on the connecting system, which is detachably coupled to the wiper blade 130. This is a method known in the prior art. Alternatively, one may use other methods known to a person skilled in the art.

Those having ordinary skill in the art will appreciate that while the shape of the blade mounting part 305 shown in the Figures 3a and 3b is U-shaped, the blade mounting part 305 may have any suitable shape that allows to detachably mounting the wiper blade 130.

As shown in the Figure 3b, the wiper arm mounting part 310 extends substantially perpendicular to the longitudinal axis 365 of the blade mounting part 305 from the first end 355 of the blade mounting part 305. Hence, the terminal part 135 is in L-shape.

The wiper arm mounting part 310 has a longitudinal elongated part comprising an upper portion 345 and a lower portion 350, the upper and the lower portions being linked to each other by vertical sidewalls, forming a hollow body. The first arm mounting area 315 and the second arm mounting area 320 are defined between the upper portion 345 and the lower portion 350 at each ends of the wiper arms mounting part 310.

In the wiper arm mounting part 310, designed for a rotatable mounting of the first and second pantograph wiper arms 110, 115, there is found the first arm mounting area 315 of the first pantograph wiper arm 110 and the second arm mounting area 320 of the second pantograph wiper arm 115.

The first arm mounting area 315 is configured for rotatably mounting the first longitudinal end 120 of the pantograph wiper arm 110 so that the first pantograph wiper arm 110 can rotate around a first arm rotation axis 115a (shown in the Figure 3b). The second arm mounting area 320 is configured for rotatably mounting the second longitudinal end 120 of the pantograph wiper arm 115 so that the second pantograph wiper arm 115 can rotate around a second arm rotation axis 120a (shown in the Figure 3b).

In the Figures 3a and 3b, the mounting areas 315 and 320 are devised as openings through which pass elements of cylindrical shape (such as a shaft, a pin, a rivet, a screw) for rotatable mounting of the pantograph arms 110 and 115. Alternatively, one can employ other methods of mounting the arms as are known to the skilled person.

As can be seen from the Figure 3a, the first arm mounting area 315 is located closer to the blade mounting part designed for rotatable mounting of the wiper blade than the second arm mounting area. More particularly, the first arm mounting area 315 is located closer to a first end 355 (shown in the Figure 3b) of the blade mounting part 305 than the second arm mounting area 320, the first end 355 of the blade mounting part linking the blade mounting part with the wiper arm mounting part. However, an alternative embodiment is also possible in which the first arm mounting area 315 is located away from the first end 355 of the blade mounting part 305 than the second arm mounting area 320.

The terminal part 135 of the wiper arm unit 105 comprises an air-guiding element 380 transforming a pressure applied by a flow of air circulating along the windshield of the motor vehicle into a pressing force of the wiper blade 130 against the windshield. The air-guiding element 380 is fixed to a sidewall 385 of the terminal part 135, and more particularly to the sidewall 385 of the second end 360 of the blade mounting part 305 in such a way that the air-guiding element 380 faces the wiper arm mounting area 310 and in such a way that a longitudinal axis 390 of the air-guiding element is substantially orthogonal to the longitudinal axis 365 of the blade mounting part 305.

Surprisingly, this specific arrangement of the air-guiding element 380 on the terminal part 135 allows particularly good aerodynamic performance at high speed compared to an arrangement in which the air-guiding element is parallel to the longitudinal axis of the wiper blade. With such arrangement shown in the Figures 3a and 3b, it is ensured a sufficiently large contact force of the wiper blade on the windshield, and a good wiping operation at any driving speed of the vehicle.

As illustrated in Figures 3a and 3b, the air-guiding element 380 includes an elongated body having an inverted "aeroplane wing" shape.

More particularly, the elongated body of the air-guiding element 380 extends transversally to the longitudinal axis X of the blade mounting part 305, from the lateral side 330 of the blade mounting part 305, with an inclined plane with respect to the longitudinal axis X of the blade mounting part 305.

The elongated body has an upper side 380a, a lower side 380b according to the vertical axis (Oz), as well as, in the direction in which a stream of airflows, a leading edge 380c and a trailing edge 380d opposite to the leading edge 380c. The upper side 380a of the air-guiding element 380 faces the wiper arm mounting part. The lower side 380b of the air-guiding element 380 faces towards a surface (not shown in the Figures) that is to be wiped. The leading edge 380c is directed towards a horizontal lower wall of the blade mounting part 305. It is the point at the front of the air-guiding element that first contacts the air. The trailing edge is a rear edge of the air-guiding element, directed towards the horizontal upper wall of the blade mounting part 305, where the airflow gets away.

In a preferred embodiment, the inclined plane formed by the air-guiding element 380 has an inclination angle with respect to the longitudinal axis X of the blade mounting part 305 which is comprised between 30 and 45 degree.

In the embodiment of Figure 3a and the Figure 3b, the air-guiding element 380 is contoured to have a downwardly concave configuration extending from the trailing edge 380d to the leading edge 380a.

Accordingly, the distance traversed by the airflow between the leading edge 380c and the trailing edge 380d via the lower side 380b is more than the distance traversed by the airflow between the leading edge 380c and the trailing edge 380d via the upper side 380a.-Preferably, the distance between the leading edge 380c and the trailing edge 380d via the lower side 380b is between 28 and 40 mm, superior to the distance between the leading edge 380c and the trailing edge 380d via the upper side 380a, which is comprised between 20 and 35 mm.

Preferably, the air-guiding element has a curvature radius comprised in the range of 22 to 28 mm and a depth comprised in the range of 26 mm to 37 mm.

This specific shape of the air-guiding element 380 thus described allows the aerodynamic performance of the terminal part to be improved at high speeds and therefore increases the wipe quality performance of the wiper device.

Indeed, when the motor vehicle is running and the wiper device 100 is operating, the direction of airflow is indicated by arrow W in the Figure 3a. The air-guiding element 380 is designed and positioned in such a way to create a down lift (D) to press down the wiper blade 130 on the vehicle window. The down lift is created during the airflow over the upper side 380a and the lower side 380b from the leading edge 380c to the trailing edge 380d. As previously mentioned, the distance between the leading edge 380c and the trailing edge 380d via the lower side 380b is more than the distance between the leading edge 380c and the trailing edge 380d via the upper side 380a. As a result, the time taken for the wind or air stream to flow over the upper side 380a of the air-guiding element 380 from the leading edge 380c to the training edge 380d is less than the time taken for the wind to flow over the lower side 380b of the air-guiding element 380 from the leading edge 380c to the training edge 380d. Hence, high pressure is created on the upper side and the low pressure on the lower side, and this pressure difference between the two sides causes to create the down lift. The down lift acts perpendicularly to the vehicle window to press the wiper blade against the vehicle window. The pressure difference thus created ensures that the wiper arm unit 105 is less lifted from the vehicle window at high speeds. Thus, a sufficiently large contact force, and error free wiping operation is ensured at any driving speed of the vehicle. Therefore, aerodynamic performance of a wiper device incorporated with the air-guiding element 380 is improved at any driving speed of the vehicle.

As the longitudinal axis 390 of the air-guiding element 380 is substantially orthogonal to the longitudinal axis 365, X of the blade mounting part 305, the air-guiding element 380 function can be used for the complete wiping pattern.

Typically, the air-guiding element 380 is made from metals like aluminium, steel or their alloys. Alternatively, plastic can be used, especially materials with good tribological properties, such as PA6, PA66, POM, PA12, and alloys of materials or materials with admixtures.

Thus, it is proposed to manufacture the terminal part 135 as a single, integrally shaped element, in particular, one comprising the blade mounting part 305, the wiper arm mounting part 310 and the air-guiding element 380. For example, the air-guiding element 380 and the terminal part 130 may be coextruded or co-moulded. In other words, the air-guiding element 380 and the terminal part 130 then form a one-piece assembly, that is to say an assembly that cannot be separated without causing the deterioration of the air-guiding element 380 and/or the terminal part 130.

Alternatively, the blade mounting part 305 and the wiper arm mounting part 310 are formed as a single piece, and the air-guiding element 380 is fixed to the blade mounting part 305 by fixing means such as an engagement connection, for instance via a form fitting connection, a bayonet connection, or by means of gluing, of welding, of screwing, of clamping or even of stamping.

In the case of an engagement connection, the blade mounting part 305 can include a locking unit (not shown in the Figures) on its sidewall to lock the air-guiding element 380 with the blade mounting part 305.

In a preferred embodiment, as illustrated in Figures 3a and 3b, an opening 395 is provided on the sidewall of the wiper arm mounting part 310 between the first arm mounting area 315 and the second arm mounting area 320. This opening 395 forms a second air-guiding element, which is different from the first air-guiding element 380 attached to the blade mounting part 305.

Indeed the airflow is channeled through the opening 395 forming the second air-guiding element and directed towards the first air-guiding element 380. This results in further improving the down lift that is being generated because of the pressure difference between the upper side 380a and the lower side 380b of the air-guiding element 380.

This opening 395 has a synergic effect of the air-guiding element 380 by reinforcing the aerodynamic performance of the wiping system.

In the case of an engagement connection, the blade mounting part 305 can include a locking unit (not shown in the Figures) on its sidewall to lock the air-guiding element 380 with the blade mounting part 305.

The invention is of course not limited to the examples described above. It will be obvious that the same may be varied in many ways without exceeding the context of the invention, and in particular to a wiper device comprising one wiper arm. In this case, the first longitudinal end of the wiper arm is mounted in the wiper arm mounting part, extending longitudinally from the first end of the blade mounting part.

The invention being thus described, achieves the target set and allows to propose a terminal part of a wiper arm whose the aerodynamic properties at high speeds are improved, in particular the orthogonal arrangement of the air-guiding element on the sidewall of the blade mounting part of the terminal part of the wiper arm.

Other variants not described above could be implemented without exceeding the context of the invention since, in accordance with the present invention; they comprise a terminal part in line with the aspect of the invention.

## Claims

1. A terminal part (135) of a wiper arm (105,110), comprising:
a blade mounting part (305) having a longitudinally elongated shape for rotatably mounting a wiper blade (130), so that the wiper blade (130) can rotate around a rotation axis of the wiper blade (130);
a wiper arm mounting part (310) for mounting a wiper arm (110) ; and
the terminal part (135) comprises an air-guiding element (380) fixed to a sidewall (385) of the blade mounting part (305) in such a way that a longitudinal axis (390) of the air-guiding element (380) is substantially orthogonal to a longitudinal axis (365) of the blade mounting part (305), the air guiding element (380) including an elongated body having an upper side (380a), a lower side (380b), the upper side (380a) being opposed to the lower side (380b), and facing to the horizontal upper wall of the blade mounting part, the lower side (380b) being configured to face a swept surface, as well as, in the direction of a stream of airflows, a leading edge (380c) and a trailing edge (380d) opposite to the leading edge (380c), the leading edge being a free edge directed towards the swept surface, the air-guiding element (380) being **characterized in that** it is contoured to have a downwardly concave configuration extending from the trailing edge (380d) to the leading edge (380c), such that the distance traversed by the airflow between the leading edge (380c) and the trailing edge (380d) via the lower side (380b) is more than the distance traversed by the airflow between the leading edge (380c) and the trailing edge (380d) via the upper side (380a).

2. The terminal part (135) as claimed in claim 1, wherein the air-guiding element (380) is fixed at a second end (360) of the blade mounting part (305).

3. The terminal part (135) as claimed in any one of preceding claims, wherein the air-guiding element (380) is fixed to the blade mounting part (305) by a fixing means.

4. The terminal part (135) as claimed in any one of preceding claims, wherein the blade mounting part (305) is in U-shaped cross section delimited by two transversely opposite longitudinal parallel sidewalls (325, 320), linked to each other by a horizontal upper wall (335), configured to delimit an interior mount region for mounting the wiper blade (130).

5. The terminal part (135) as claimed in any one of preceding claims, wherein the wiper arm mounting part (310) is configured for rotatably mounting at least one wiper arm (110) in a arm mounting area (315) so that the at least one wiper arm (110) can rotate around a arm rotation axis (115a) ; preferably the wiper arm mounting part (310) is configured for rotatably mounting a first wiper arm (110) in a first arm mounting area (315) and a second wiper arm (115) in a second mounting area (320) so that the first wiper arm (110) can rotate around a first arm rotation axis (115a) while the second wiper arm (110) can rotate around a second arm rotation axis (120a).

6. The terminal part (135) as claimed in any one of the preceding claims, wherein the wiper arm mounting part (310) extends substantially perpendicular to the longitudinal axis (365) of the blade mounting part (305) from a first end (355) of the blade mounting part (305).

7. The terminal part (135) as claimed in any one of claims 5 and 6, wherein the wiper arm mounting part (310) is a longitudinal elongated part comprising an upper portion (345) and a lower portion (350), and wherein the first arm mounting area (315) and the second arm mounting area (320) are defined between the upper portion (345) and the lower portion (350).

8. The terminal part (135) as claimed in any one of claims 5 - 7, wherein the wiper arm mounting part (310) includes an opening (395) between the first arm mounting area (315) and the second arm mounting area (320).

9. The terminal part (135) as claimed in any one of preceding claims, **characterized in that** the terminal part (135) is a single integrally formed part.

10. A wiper arm unit (105) comprising at least one wiper arm (110, 115) and a terminal part (135) as claimed in preceding claims 1-9, wherein a first longitudinal end (120) of the at least one wiper arm (305,110) is mounted in the terminal part (135) claimed in preceding claims 1-9, and a second longitudinal end (125) of the at least one wiper arm is fixed to a wiper shaft.

11. The wiper arm unit (205) as claimed in claim 10, wherein the at least one wiper arm (305,110) has a rounded profile.

12. A wiper device (100) comprising:
an elongated flat wiper blade (130) adapted for wiping a windshield;
the wiper arm unit (105) as claimed in claims 10 and 11; and
the terminal part (135) of the wiper arm unit (105) being used for coupling the wiper arm unit (105) with the wiper blade (130).

## Patentansprüche

1. Endteil (135) eines Wischarms (105, 110), umfassend:
einen Blattmontageteil (305) mit einer in Längsrichtung länglichen Form zum drehbaren Montieren eines Wischblatts (130), so dass sich das Wischblatt (130) um eine Rotationsachse des Wischblatts (130) drehen kann,
einen Wischarmmontageteil (310) zum Montieren eines Wischarms (110) und
der Endteil (135) umfasst ein Lüftführungselement (380), das so an einer Seitenwand (385) des Blattmontageteils (305) befestigt ist, dass eine Längsachse (390) des Lüftführungselements (380) im Wesentlichen orthogonal zu einer Längsachse (365) des Blattmontageteils (305) verläuft,
wobei das Lüftführungselement (380) einen länglichen Körper aufweist, der eine obere Seite (380a), eine untere Seite (380b) hat, wobei die obere Seite (380a) der unteren Seite (380b) gegenüberliegt und der horizontalen oberen Wand des Blattmontageteils zugewandt ist, wobei die untere Seite (380b) dazu ausgestaltet ist, einer überstrichenen Fläche zugewandt zu sein, sowie in der Richtung einer Luftströmung einen vorderen Rand (380c) und einen dem vorderen Rand (380c) gegenüberliegenden hinteren Rand (380d), wobei der vordere Rand ein freier Rand ist, der auf die überstrichene Fläche zu gerichtet ist, wobei das Lüftführungselement (380) **dadurch gekennzeichnet ist, dass** es konturiert ist, so dass es eine nach unten konkave Konfiguration hat, die sich von dem hinteren Rand (380d) zu dem vorderen Rand (380c) erstreckt, so dass die von der Luftströmung zwischen dem vorderen Rand (380c) und dem hinteren Rand (380d) über die untere Seite (380b) zurückgelegte Strecke größer als die von der Luftströmung zwischen dem vorderen Rand (380c) und dem hinteren Rand (380d) über die obere Seite (380a) zurückgelegte Strecke ist.

2. Endteil (135) nach Anspruch 1, wobei das Lüftführungselement (380) an einem zweiten Ende (360) des Blattmontageteils (305) befestigt ist.

3. Endteil (135) nach einem der vorhergehenden Ansprüche, wobei das Lüftführungselement (380) durch ein Befestigungsmittel an dem Blattmontageteil (305) befestigt ist.

4. Endteil (135) nach einem der vorhergehenden Ansprüche, wobei der Blattmontageteil (305) einen U-förmigen Querschnitt hat, der durch zwei quer gegenüberliegende parallele Längsseitenwände (325, 320) begrenzt ist, die über eine horizontale obere Wand (335) verbunden sind, die dazu ausgestaltet ist, einen inneren Montagebereich zum Montieren des Wischblatts (130) zu begrenzen.

5. Endteil (135) nach einem der vorhergehenden Ansprüche, wobei der Wischarmmontageteil (310) zur drehbaren Montage mindestens eines Wischarms (110) in einem Armmontagebereich (315) ausgestaltet ist, so dass sich der mindestens eine Wischarm (110) um eine Armrotationsachse (115) drehen kann, wobei vorzugsweise der Wischarmmontageteil (310) zur drehbaren Montage eines ersten Wischarms (110) in einem ersten Armmontagebereich (315) und eines zweiten Wischarms (115) in einem zweiten Armmontagebereich (320) ausgestaltet ist, so dass sich der erste Wischarm (110) um eine erste Armrotationsachse (115a) drehen kann, während sich der zweite Wischarm (110) um eine zweite Armrotationsachse (120a) drehen kann.

6. Endteil (135) nach einem der vorhergehenden Ansprüche, wobei sich der Wischarmmontageteil (310) im Wesentlichen senkrecht zu der Längsachse (365) des Blattmontageteils (305) von einem ersten Ende (355) des Blattmontageteils (305) erstreckt.

7. Endteil (135) nach einem der Ansprüche 5 und 6, wobei der Wischarmmontageteil (310) ein in Längsrichtung länglicher Teil ist, der einen oberen Abschnitt (345) und einen unteren Abschnitt (350) umfasst und wobei der erste Armmontagebereich (315) und der zweite Armmontagebereich (320) zwischen dem oberen Abschnitt (345) und dem unteren Abschnitt (350) definiert sind.

8. Endteil (135) nach einem der Ansprüche 5 - 7, wobei der Wischarmmontageteil (310) eine Öffnung (395) zwischen dem ersten Armmontagebereich (315) und dem zweiten Armmontagebereich (320) aufweist.

9. Endteil (135) nach einem der vorhergehenden Ansprüche, **dadurch gekennzeichnet, dass** der Endteil (135) ein einziger integral ausgebildeter Teil ist.

10. Wischarmeinheit (105), umfassend mindestens einen Wischarm (110, 115) und einen Endteil (135) nach den vorhergehenden Ansprüchen 1 - 9, wobei ein erstes Längsende (120) des mindestens einen Wischarms (305, 110) in dem Endteil (135) nach den vorhergehenden Ansprüchen 1 - 9 montiert ist und ein zweites Längsende (125) des mindestens einen Wischarms an einer Wischerwelle befestigt ist.

11. Wischarmeinheit (105) nach Anspruch 10, wobei der mindestens eine Wischarm (305, 110) ein abgerundetes Profil hat.

12. Wischvorrichtung (100), umfassend:
ein längliches flaches Wischblatt (130), das zum Wischen einer Windschutzscheibe ausgeführt ist,
die Wischarmeinheit (105) nach Ansprüchen 10 und 11 und
wobei der Endteil (135) der Wischarmeinheit (105) zum Koppeln der Wischarmeinheit (105) mit dem Wischblatt (130) dient.

## Revendications

1. Pièce terminale (135) d'un bras d'essuie-glace (105, 110), comprenant :
une pièce de montage de balai (305) ayant une forme allongée longitudinalement pour monter de façon rotative un balai d'essuie-glace (130), de sorte que le balai d'essuie-glace (130) puisse tourner autour d'un axe de rotation du balai d'essuie-glace (130) ;
une pièce de montage de bras d'essuie-glace (310) pour monter un bras d'essuie-glace (110) ; et
la pièce terminale (135) comprend un élément de guidage d'air (380) fixé à une paroi latérale (385) de la pièce de montage de balai (305) de sorte qu'un axe longitudinal (390) de l'élément de guidage d'air (380) soit sensiblement orthogonal à un axe longitudinal (365) de la pièce de montage de balai (305),
l'élément de guidage d'air (380) comprenant un corps allongé ayant un côté supérieur (380a), un côté inférieur (380b), le côté supérieur (380a) étant opposé au côté inférieur (380b), et faisant face à la paroi supérieure horizontale de la pièce de montage de balai, le côté inférieur (380b) étant conçu pour faire face à une surface balayée, ainsi que, dans la direction d'un flux d'air, un bord d'attaque (380c) et un bord de fuite (380d) opposé au bord d'attaque (380c), le bord d'attaque étant un bord libre dirigé vers la surface balayée,
l'élément de guidage d'air (380) étant **caractérisé en ce qu'**il est profilé pour avoir une configuration concave vers le bas s'étendant du bord de fuite (380d) au bord d'attaque (380c), de sorte que la distance parcourue par le flux d'air entre le bord d'attaque (380c) et le bord de fuite (380d) par l'intermédiaire du côté inférieur (380b) soit supérieure à la distance parcourue par le flux d'air entre le bord d'attaque (380c) et le bord de fuite (380d) par l'intermédiaire du côté supérieur (380a).

2. Pièce terminale (135) selon la revendication 1, l'élément de guidage d'air (380) étant fixé à une seconde extrémité (360) de la pièce de montage de balai (305).

3. Pièce terminale (135) selon l'une quelconque des revendications précédentes, l'élément de guidage d'air (380) étant fixé à la pièce de montage de balai (305) par un moyen de fixation.

4. Pièce terminale (135) selon l'une quelconque des revendications précédentes, la pièce de montage de balai (305) ayant une section transversale en forme de U délimitée par deux parois latérales parallèles longitudinales transversalement opposées (325, 320), reliées l'une à l'autre par une paroi supérieure horizontale (335), conçues pour délimiter une région de montage intérieure pour le montage du balai d'essuieglace (130).

5. Pièce terminale (135) selon l'une quelconque des revendications précédentes, la pièce de montage de bras d'essuie-glace (310) étant conçue pour monter de façon rotative au moins un bras d'essuie-glace (110) dans une zone de montage de bras (315) de sorte que l'au moins un bras d'essuie-glace (110) puisse tourner autour d'un axe de rotation de bras (115a) ; de préférence, la pièce de montage de bras d'essuie-glace (310) étant conçue pour monter de façon rotative un premier bras d'essuie-glace (110) dans une première zone de montage de bras (315) et un second bras d'essuie-glace (115) dans une seconde zone de montage (320) de sorte que le premier bras d'essuie-glace (110) puisse tourner autour d'un premier axe de rotation de bras (115a) tandis que le second bras d'essuie-glace (110) peut tourner autour d'un second axe de rotation de bras (120a).

6. Pièce terminale (135) selon l'une quelconque des revendications précédentes, la pièce de montage de bras d'essuie-glace (310) s'étendant sensiblement perpendiculairement à l'axe longitudinal (365) de la pièce de montage de balai (305) à partir d'une première extrémité (355) de la pièce de montage de balai (305).

7. Pièce terminale (135) selon l'une quelconque des revendications 5 et 6, la pièce de montage de bras d'essuie-glace (310) étant une partie allongée longitudinale comprenant une partie supérieure (345) et une partie inférieure (350), et la première zone de montage de bras (315) et la seconde zone de montage de bras (320) étant définies entre la partie supérieure (345) et la partie inférieure (350).

8. Pièce terminale (135) selon l'une quelconque des revendications 5 à 7, la pièce de montage de bras d'essuie-glace (310) comprenant une ouverture (395) entre la première zone de montage de bras (315) et la seconde zone de montage de bras (320).

9. Pièce terminale (135) selon l'une quelconque des revendications précédentes, **caractérisée en ce que** la pièce terminale (135) est une pièce unique formée d'un seul tenant.

10. Unité de bras d'essuie-glace (105) comprenant au moins un bras d'essuie-glace (110, 115) et une pièce terminale (135) selon les revendications précédentes 1 à 9, une première extrémité longitudinale (120) de l'au moins un bras d'essuie-glace (305, 110) étant montée dans la pièce terminale (135) selon les revendications précédentes 1 à 9, et une seconde extrémité longitudinale (125) de l'au moins un bras d'essuie-glace étant fixée à un arbre d'essuie-glace.

11. Unité de bras d'essuie-glace (205) selon la revendication 10, l'au moins un bras d'essuie-glace (305, 110) ayant un profil arrondi.

12. Dispositif d'essuie-glace (100) comprenant :
un balai d'essuie-glace plat allongé (130) destiné à essuyer un pare-brise ;
l'unité de bras d'essuie-glace (105) selon les revendications 10 et 11 ; et
la pièce terminale (135) de l'unité de bras d'essuie-glace (105) étant utilisée pour accoupler l'unité de bras d'essuie-glace (105) avec le balai d'essuie-glace (130).
